# EUROPÄISCHE PATENTANMELDUNG

(11) **EP 1 780 008 A1**
(43) Veröffentlichungstag der Anmeldung: **02.05.2007**
(21) Anmeldenummer: 05405606.4
(22) Anmeldetag: 26.10.2005
(51) Int. Cl.: B32B 27/32

(54) **Schockabsorbierender Siegelfim für ein Beutellaminat**

(71) Anmelder: Alcan Technology & Management Ltd., 8212 Neuhausen am Rheinfall (CH)
(72) Erfinder: Bevilacqua, Markus, 8213 Neunkirch (CH); Holzwarth, Gunther, 8212 Neuhausen (CH); Jammet, Jean-Claude, 8212 Neuhausen (CH); Hentschel, Thomas, 8200 Schaffhausen (CH)

(57) **Zusammenfassung**

Ein Siegelfilm (16) mit schockabsorbierenden Eigenschaften für ein Verpackungslaminat (10) zur Herstellung von Beuteln mit wenigstens einer Siegelnaht (18) besteht aus wenigstens zwei Schichten mit unterschiedlicher Biegesteifigkeit, wobei die Schichten (S1, S3) mit der höheren Biegesteifigkeit einen E-Modul von 400 bis 4000 MPa und die Schichten (S2) mit der niedrigeren Biegesteifigkeit einen E-Modul von 100 bis 1000 MPa aufweisen und die Schichten (S1, S3) mit der höheren Biegesteifigkeit unter Siegelbedingungen eine höhere Scherviskosität aufweisen als die Schichten (S2) mit der niedrigeren Biegesteifigkeit. Durch geeignete Wahl der Geometrie der Siegelbacken (24, 26), des Siegeldruckes, der Siegeltemperatur und der Siegelzeit wird das Material der Schichten (S2) mit der niedrigeren Biegesteifigkeit und niedrigeren Scherviskosität an den Rand (20) der Siegelnaht (18) gedrückt. Dies hat zur Folge, dass bei einem Sturz eines Beutels ein von einer Siegelnaht des Beutels ausgehender Riss im angehäuften zähelastischen Material durch Aufnahme der in die Siegelnaht eingeleiteten kinetischen Energie durch plastische Verformung gestoppt wird.

## Beschreibung

Die Erfindung betrifft einen Siegelfilm mit schockabsorbierenden Eigenschaften für ein Verpackungslaminat zur Herstellung von Beuteln mit wenigstens einer Siegelnaht, ein Verpackungslaminat mit einem Siegelfilm und ein Verfahren zur Herstellung von über wenigstens eine Siegelnaht verschlossenen Beuteln aus einem Verpackungslaminat mit einem Siegelfilm.

Güter des täglichen Bedarfs werden oft in Beutel abgepackt. Ein klassisches Beutelsystem ist der Standbeutel bzw. die "Doy-Pack" Beutelform. Je nach Füllgut und Anforderungen werden dazu Materialaufbauten mit zwei bis vier Hauptschichten verwendet.

Typische Schichtaufbauten von Verpackungslaminaten zur Herstellung von Beuteln für flüssige, flüssig/stückige und pastöse Füllgüter mit einer langen Haltbarkeit von mehr als dreissig Tagen sind beispielsweise
PET / Aluminium / oPA / PE (oder PP)
PET / vakuumbeschichtete Barriere / oPA / PE (oder PP)
PET / vakuumbeschichtete Barriere / PET / PE (oder PP)
PET / PE :EVOH:PE (oder PP:EVOH:PP)

Die Kombination der verschiedenen Schichten führt zu den gewünschten Eigenschaften. PET (Polyethylenterephthalat) ist thermoresisitent, ergibt eine glänzende Oberfläche und ist gut bedruckbar, oPA (orientiertes Polyamid) führt zu einer hohen Durchstossfestigkeit und Knickbruchbeständigkeit, eine Aluminiumfolie, eine Vakuumbeschichtung mit SiOₓ oder eine Schicht aus EVOH (Ethyl-Vinyl-Alkohol) als Barriereschicht erhöht die Durchtrittssperrwirkung gegen Wasserdampf, Sauerstoff und andere Gase sowie Fremdaromen. Die Dicken der einzelnen Schichten variieren je nach Anwendungsfall. Typische Filmschichtdicken sind: PET 12 µm, Aluminium 8 - 12 µm, oPA 12 - 15 µm, PE und PP 50 - 150 µm. Die Filme bzw. Folien werden typischerweise mit Polyurethan-Klebstoffen verklebt.

Die Kombination der Schichten führt neben anderen mechanischen Eigenschaften auch zu der erforderlichen Zähigkeit der Siegelnahtverbindung, die dem fertigen Beutel die Form gibt. Dadurch wird verhindert, dass der Beutel bei einem Sturz aufplatzt und das Füllgut unbrauchbar wird.

Die Herstellung der erwähnten Schichtkombinationen ist vergleichsweise komplex. Es besteht daher der Wunsch nach einfacher herzustellenden, kostengünstigen und weniger Schichten, z.B. nur zwei Hauptschichten, umfassenden Laminaten. Die eingesetzten Materialien müssen verschiedene Eigenschaften in sich vereinigen, hauptsächlich aber verhindern, dass der fertige Beutel nach mehreren Stürzen entlang der Siegelnähte reisst.

Der Erfindung liegt die Aufgabe zugrunde, einen Siegelfilm bereitzustellen, der die Herstellung einer Siegelnaht mit schockabsorbierenden Eigenschaften ermöglicht. Ein weiteres Ziel der Erfindung ist die Schaffung eines geeigneten Siegelverfahrens bei der Herstellung von Beuteln aus einem Verpackungslaminat mit dem Siegelfilm.

Zur erfindungsgemässen Lösung der Aufgabe führt, dass der Siegelfilm aus wenigstens zwei Schichten mit unterschiedlicher Biegesteifigkeit besteht, wobei die Schichten mit der höheren Biegesteifigkeit einen E-Modul von 400 bis 4000 MPa, vorzugsweise 800 bis 2500 MPa, und die Schichten mit der niedrigeren Biegesteifigkeit einen E-Modul von 100 bis 1000 MPa aufweisen und die Schichten mit der höheren Biegesteifigkeit unter Siegelbedingungen eine höhere Scherviskosität aufweisen als die Schichten mit der niedrigeren Biegesteifigkeit.

Der Kern der Erfindung liegt in der Kombination mehrerer Schichten, die sich hinsichtlich der Bruchsicherheit besser verhalten als eine konventioneller Siegelfilm aus einer einzelnen, diskreten Schicht.

Der Effekt der Schockabsorption kommt vor allem zum Tragen, wenn der Siegelfilm mit einer weiteren Schicht, typischerweise mit einem Film aus orientiertem Polyethylenterephthalat (oPET), orientiertem Polypropylen (oPP) oder orientiertem Polyamid (oPA) kaschiert ist.

Die Schichten mit der höheren Biegesteifigkeit und der höheren Scherviskosität unter Siegelbedingungen bestehen bevorzugt aus reinen Polyolefinen oder aus Blends von Polyolefinen, insbesondere aus Polyethylen, Polypropylen oder Blends von Polyethylen oder Polypropylen mit Copolymeren aus Ethylen und Propylen.

Die Schichten mit der niedrigeren Biegesteifigkeit und der niedrigeren Scherviskosität unter Siegelbedingungen bestehen bevorzugt aus thermoplastischen Elastomeren (TPE), insbesondere TPE auf der Basis von Styrol /Ethylen / Butylen / Styrol, Polyolefinen, EPR (synthetischer Kautschuk auf Basis Ethylen Propylen) oder EPDM (Terpolymer auf der Basis von Ethylen Propylen Dien Monomeren), Legierungen von Polyamid (PA) mit Polyolefinen, Blends von PP/EPR/PE, PP/EPDM, oder PE/EVA/EPDM, oder Impact-Copolymer Polypropylen (ICP).

Ein geeignetes Siegelverfahren zeichnet sich dadurch aus, dass die Geometrie der Siegelbacken, der Siegeldruck, die Siegeltemperatur und die Siegelzeit so gewählt werden, dass die Schichten mit der niedrigeren Biegesteifigkeit und niedrigeren Scherviskosität an den Rand der Siegelnaht gedrückt werden und zu einer Anhäufung von zähelastischem Material im Bereich des Siegelrandes führen. Dies hat zur Folge, dass bei einem Sturz eines Beutels ein von einer Siegelnaht des Beutels ausgehender Riss im angehäuften zähelastischen Material durch Aufnahme der in die Siegelnaht eingeleiteten kinetischen Energie durch plastische Verformung gestoppt wird.

Weitere Vorteile, Merkmale und Einzelheiten ergeben sich aus der nachfolgenden Beschreibung bevorzugter Ausführungsbeispiele sowie anhand der Zeichnung; diese zeigt schematisch in
- Fig. 1 den unterschiedlichen Verlauf der Scherviskosität verschiedener Schichten eines Siegelfilms;
- Fig. 2 einen Querschnitt durch zwei gegeneinander zu siegelnde Verpackungslaminate;
- Fig. 3 die zwischen Siegelbacken gegeneinander gesiegelten Verpackungslaminate von Fig. 2;
- Fig. 4, 5 Siegelbacken von Fig. 3 mit anderer Geometrie.

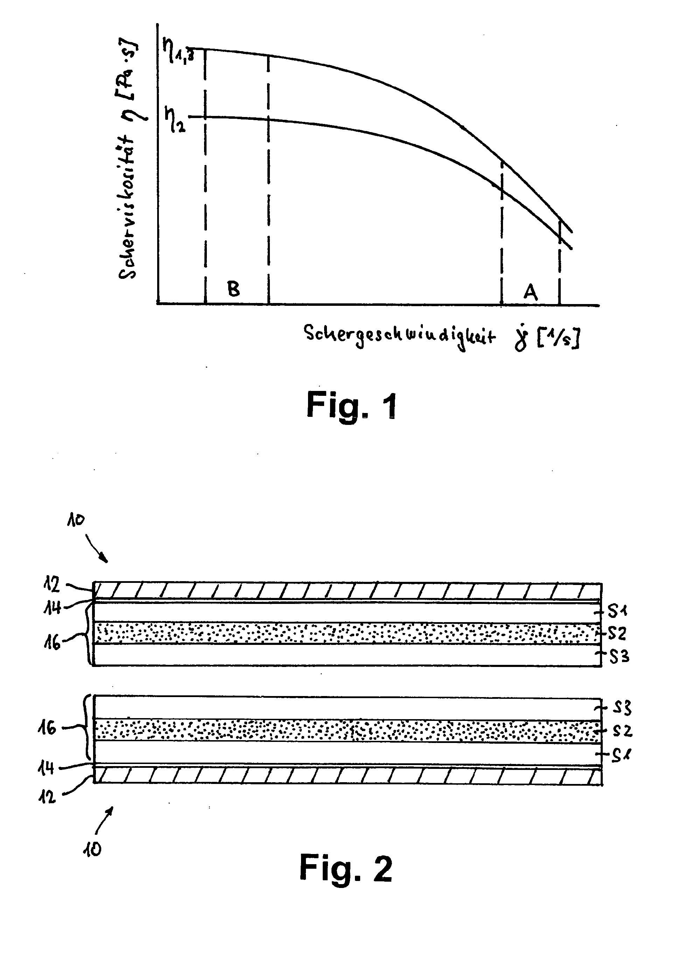

Eine in Fig. 2 gezeigtes Verpackungslaminat 10 zur Herstellung von Beuteln mit wenigstens einer Siegelnaht weist einen PET-Film 12 als Aussenseite und einen mit dem PET-Film 12 über einen Klebstofffilm 14 auf der Basis von beispielsweise Polyurethan verbundenen Siegelfilm 16 als Innen- oder Siegelseite auf. Der Siegelfilm 16 setzt sich zusammen aus drei Schichten S1, S2, S3. Die dem Klebstofffilm 14 zugewandte Schicht S1 und die der Siegelseite zugewandte Schicht S3 weisen einen E-Modul von beispielsweise 2000 MPa, die zwischen den Schichten S1 und S3 liegende Schicht S2 einen E-Modul von beispielsweise 500 MPa auf. Das Material der Schichten S1 und S3 zeigt somit ein steifes Verhalten, während das Material der Schicht S2 zähelastische Eigenschaften aufweist. Die Materialien der Schichten S1, S2, S3 sind zudem so ausgewählt, dass die Scherviskosität η_{1,3} des Materials der Schichten S1 und S3 und die Scherviskosität η₂ des Materials der Schicht S2 etwa den in Fig. 1 dargestellten Verlauf zeigen. Im Bereich A der Verarbeitung der Materialien, z.B. in einem Extruder, liegen die Scherviskositäten der Materialien für alle Schichten S1, S2, S3 nahe beieinander. Im Bereich B des Siegelns liegt die Scherviskosität η_{1,3} des Materials der Schichten S1 uns S3 höher als die Scherviskosität η₂ des Materials der Schicht S2.

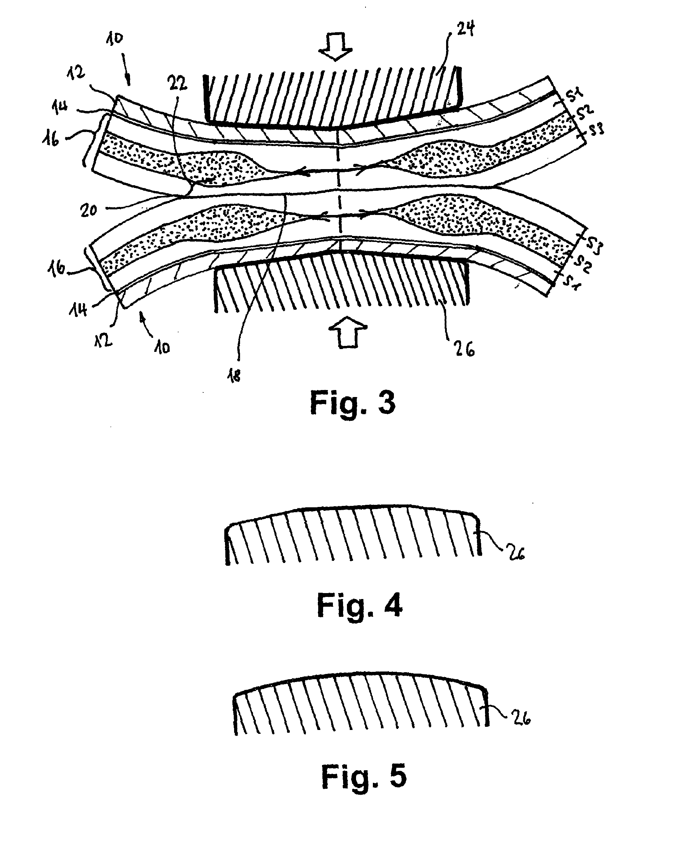

Die unter Siegelbedingungen unterschiedlichen Scherviskositäten führen zu einer in Fig.3 dargestellten unterschiedlichen Verschiebung der Materialien der Schichten S1, S2, S3. Das zähelastische Material der Schicht S2 fliesst wegen seiner niedrigeren Scherviskosität η₂ gegen den Rand 20 der zwischen Siegelbacken 24, 26 gebildeten Siegelnaht 18 und führt dort zu einer Anhäufung von zähelastischem Material, während das Material der Schichten S1 und S3 wegen seiner höheren Scherviskosität η_{1,3} praktisch keine Verschiebung erfährt.

Die Ursache der unter Siegelbedingungen unterschiedlichen Scherviskositäten und der sich daraus ergebenden unterschiedlichen Verschiebung der Materialien der Schichten S1, S2, S3 beruht auf unterschiedlichen Schmelztemperaturen. Die Materialien der Schichten S1 und S3 weisen demzufolge eine höhere Schmelztemperatur auf als das Material der Schicht S2. Unter Siegelbedingungen ist das Material der Schicht S2 flüssig bzw. fliessfähiger als die Materialien der Schichten S1 und S3, die unter Siegelbedingungen fest bzw. weniger fliessfähig als das Material der Schicht S2 sind.

Die Anreicherung von zähelastischem Material im Bereich des Siegelrandes 20 erhöht die Schlagzähigkeit der Siegelzone. Bei einem Sturz eines aus dem Verpackungslaminat 10 hergestellten Beutels wird insbesondere der dem Beutelinneren zugewandte Rand 20 der Siegelnaht 18 schlagartig beansprucht, so dass sich ein Riss 22 am Siegelrand 20 bildet, die Schicht S3 durchtrennt und in der Anhäufung von zähelastischem Material in der angrenzenden Schicht S2 gestoppt wird.

Die Schichten S1 und S3 mit der höheren Biegesteifigkeit und der höheren Scherviskosität unter Siegelbedingungen bestehen beispielsweise aus Polypropylen.

Die Schicht S2 mit der niedrigeren Biegesteifigkeit und der niedrigeren Scherviskosität unter Siegelbedingungen besteht beispielsweise aus einem thermoplastischen Elastomer (TPE) auf der Basis von Styrol / Ethylen / Butylen / Styrol.

Der Einfachheit halber ist in dem in der Zeichnung dargestellten Beispiel ein Siegelfilm 16 mit nur drei Schichten S1, S2, S3 gezeigt. Der Siegelfilm 16 kann jedoch bis zu sieben und mehr Schichten aufweisen und umfasst vorzugsweise fünf Schichten.

Die Materialverschiebung kann durch geeignete Ausgestaltung der Geometrie der Siegelbacken und Einstellung der Siegelbedingungen unterstützt werden. Mögliche Geometrien von Siegelbacken 24, 26 ergeben sich aus den Fig. 3 bis 5.

## Patentansprüche

1. Siegelfilm mit schockabsorbierenden Eigenschaften für ein Verpackungslaminat (10) zur Herstellung von Beuteln mit wenigstens einer Siegelnaht (18),
**dadurch gekennzeichnet, dass**
der Siegelfilm (16) aus wenigstens zwei Schichten mit unterschiedlicher Biegesteifigkeit besteht, wobei die Schichten (S1, S3) mit der höheren Biegesteifigkeit einen E-Modul von 400 bis 4000 MPa und die Schichten (S2) mit der niedrigeren Biegesteifigkeit einen E-Modul von 100 bis 1000 MPa aufweisen und die Schichten mit der höheren Biegesteifigkeit unter Siegelbedingungen eine höhere Scherviskosität aufweisen als die Schichten mit der niedrigeren Biegesteifigkeit.

2. Siegelfilm nach Anspruch 1, **dadurch gekennzeichnet, dass** die Schichten (S1, S3) mit der höheren Biegesteifigkeit einen E-Modul von 800 bis 2500 MPa aufweisen.

3. Siegelfilm nach Anspruch 1 oder 2, **dadurch gekennzeichnet, dass** der Siegelfilm (16) bis zu sieben Schichten aufweist und vorzugsweise aus fünf Schichten besteht.

4. Siegelfilm nach einem der Ansprüche 1 bis 3, **dadurch gekennzeichnet, dass** die Schichten (S1, S3) mit der höheren Biegesteifigkeit und der höheren Scherviskosität unter Siegelbedingungen aus reinen Polyolefinen oder Mischungen von Polyolefinen, insbesondere aus Polyethylen, Polypropylen oder Mischungen von Polyethylen oder Polypropylen mit Copolymeren aus Ethylen und Propylen bestehen.

5. Siegelfilm nach einem der Ansprüche 1 bis 3, **dadurch gekennzeichnet, dass** die Schichten (S2) mit der niedrigeren Biegesteifigkeit und der niedrigeren Scherviskosität unter Siegelbedingungen aus thermoplastischen Elastomeren (TPE), insbesondere TPE auf der Basis von Styrol / Ethylen / Butylen / Styrol, Polyolefinen, EPR (synthetischer Kautschuk auf Basis Ethylen Propylen) oder EPDM (Terpolymer auf der Basis von Ethylen Propylen Dien Monomeren), Legierungen von Polyamid (PA) mit Polyolefinen, Blends von PP/EPR/PE, PP/EPDM, oder PE/EVA/EPDM, oder Impact-Copolymer Polypropylen (ICP) bestehen.

6. Verpackungslaminat mit einem Siegelfilm mit schockabsorbierenden Eigenschaften zur Herstellung von Beuteln mit wenigstens einer Siegelnaht (18),
**dadurch gekennzeichnet, dass**
der Siegelfilm (16) aus wenigstens zwei Schichten mit unterschiedlicher Biegesteifigkeit besteht, wobei die Schichten (S1, S3) mit der höheren Biegesteifigkeit einen E-Modul von 400 bis 4000 MPa und die Schichten (S2) mit der niedrigeren Biegesteifigkeit einen E-Modul von 100 bis 1000 MPa aufweisen und die Schichten (S1, S3) mit der höheren Biegesteifigkeit unter Siegelbedingungen eine höhere Scherviskosität aufweisen als die Schichten (S2) mit der niedrigeren Biegesteifigkeit.

7. Verpackungslaminat nach Anspruch 6, **dadurch gekennzeichnet, dass** die Schichten (S1, S3) mit der höheren Biegesteifigkeit einen E-Modul von 800 bis 2500 MPa aufweisen.

8. Verpackungslaminat nach Anspruch 6 oder 7, **dadurch gekennzeichnet, dass** der Siegelfilm (16) bis zu sieben Schichten aufweist und vorzugsweise aus fünf Schichten besteht.

9. Verpackungslaminat nach einem der Ansprüche 6 bis 8, **dadurch gekennzeichnet, dass** die Schichten (S1, S3) mit der höheren Biegesteifigkeit und der höheren Scherviskosität unter Siegelbedingungen aus reinen Polyolefinen oder Mischungen von Polyolefinen, insbesondere aus Polyethylen, Polypropylen oder Mischungen von Polyethylen oder Polypropylen mit Copolymeren aus Ethylen und Propylen bestehen.

10. Verpackungslaminat nach einem der Ansprüche 6 bis 8, **dadurch gekennzeichnet, dass** die Schichten (S2) mit der niedrigeren Biegesteifigkeit und der niedrigeren Scherviskosität unter Siegelbedingungen aus thermoplastischen Elastomeren (TPE), insbesondere TPE auf der Basis von Styrol / Ethylen / Butylen / Styrol, Polyolefinen, EPR (synthetischer Kautschuk auf Basis Ethylen Propylen) oder EPDM (Terpolymer auf der Basis von Ethylen Propylen Dien Monomeren), Legierungen von Polyamid (PA) mit Polyolefinen, Blends von PP/EPR/PE, PP/EPDM, oder PE/EVA/EPDM, oder Impact-Copolymer Polypropylen (ICP) bestehen.

11. Verfahren zur Herstellung von über wenigstens eine Siegelnaht (18) verschlossenen Beuteln aus einem Verpackungslaminat (10) mit einem Siegelfilm (16), wobei die Siegelnaht (18) zwischen zwei Siegelbacken (24, 26) erzeugt wird,
**dadurch gekennzeichnet, dass**
der Siegelfilm (16) aus wenigstens zwei Schichten mit unterschiedlicher Biegesteifigkeit besteht, wobei die Schichten (S1, S3) mit der höheren Biegesteifigkeit einen E-Modul von 400 bis 4000 MPa und die Schichten (S2) mit der niedrigeren Biegesteifigkeit einen E-Modul von 100 bis 1000 MPa aufweisen und die Schichten (S1, S3) mit der höheren Biegesteifigkeit unter Siegelbedingungen eine höhere Scherviskosität aufweisen als die Schichten (S2) mit der niedrigeren Biegesteifigkeit, und dass die Geometrie der Siegelbacken (24, 26), der Siegeldruck, die Siegeltemperatur und die Siegelzeit so gewählt werden, dass das Material der Schichten (S2) mit der niedrigeren Biegesteifigkeit und niedrigeren Scherviskosität an den Rand (20) der Siegelnaht (18) gedrückt wird.

12. Verfahren nach Anspruch 11, **dadurch gekennzeichnet, dass** die Schichten (S1, S3) mit der höheren Biegesteifigkeit einen E-Modul von 800 bis 2500 MPa aufweisen.

13. Verfahren nach Anspruch 11 oder 12, **dadurch gekennzeichnet, dass** der Siegelfilm (16) bis zu sieben Schichten aufweist und vorzugsweise aus fünf Schichten besteht.

14. Verfahren nach einem der Ansprüche 11 bis 13, **dadurch gekennzeichnet, dass** die Schichten (S1, S3) mit der höheren Biegesteifigkeit und der höheren Scherviskosität unter Siegelbedingungen aus reinen Polyolefinen oder Mischungen von Polyolefinen, insbesondere aus Polyethylen, Polypropylen oder Mischungen von Polyethylen oder Polypropylen mit Copolymeren aus Ethylen und Propylen bestehen.

15. Verfahren nach einem der Ansprüche 11 bis 13, **dadurch gekennzeichnet, dass** die Schichten (S2) mit der niedrigeren Biegesteifigkeit und der niedrigeren Scherviskosität unter Siegelbedingungen aus thermoplastischen Elastomeren (TPE), insbesondere TPE auf der Basis von Styrol / Ethylen / Butylen / Styrol, Polyolefinen, EPR (synthetischer Kautschuk auf Basis Ethylen Propylen) oder EPDM (Terpolymer auf der Basis von Ethylen Propylen Dien Monomeren), Legierungen von Polyamid (PA) mit Polyolefinen, Blends von PP/EPR/PE, PP/EPDM, oder PE/EVA/EPDM, oder Impact-Copolymer Polypropylen (ICP) bestehen.
